# EUROPÄISCHE PATENTSCHRIFT

(11) **EP 2 192 058 B1**
(45) Veröffentlichungstag und Bekanntmachung des Hinweises auf die Patenterteilung: **28.11.2012**
(21) Anmeldenummer: 09012253.2
(22) Anmeldetag: 28.09.2009
(51) Int. Cl.: B65G 15/60

(54) **Wendevorrichtung**
Turning device
Dispositif de retournement

(30) Priorität: 26.11.2008 DE 102008059059
(43) Veröffentlichungstag der Anmeldung: 02.06.2010
(73) Patentinhaber: Isenmann Siebe GmbH, D-76131 Karlsruhe (DE)
(72) Erfinder: Sattler, Matthias, 64625 Bensheim (DE); Gebhard, Gregor, 76131 Karlsruhe (DE); Schwarz, Jürgen, 67346 Speyer (DE)
(74) Vertreter: Cohausz Hannig Borkowski Wißgott

(56) Entgegenhaltungen:
- DE-A1- 1 499 115
- DE-B- 1 063 962
- DE-U1-202007 013 659
- FR-A1- 2 735 113
- US-A- 5 799 780

## Beschreibung

Die Erfindung betrifft eine Vorrichtung zum Wenden des umlaufenden Gurtes eines Förderbandes.

Es ist bekannt, den umlaufenden Gurt eines Förderbandes im Bereich des unteren Trums zu wenden, so dass das Förderband in dem unteren Bereich, mit dem es zurückläuft, stets mit seiner sauberen Seite auf den Rollen liegt. Die hierzu bisher verwendeten Wendevorrichtungen sind aufwendig in der Herstellung und Montage und einem erheblichen Verschleiß ausgesetzt. Darüber hinaus besitzen diese Wendevorrichtungen erhebliche Abmessungen.

Aufgabe der Erfindung ist es, eine Wendevorrichtung der eingangs genannten Art so zu verbessern, dass sie bei einem sicheren Führen und Wenden des Gurtes einfach in Herstellung, Montage und Wartung ist.

Diese Aufgabe wird erfindungsgemäß dadurch gelöst, dass mindestens ein U-förmig gebogenes Führungsteil vorgesehen ist, innerhalb dem der Gurt geführt und gewendet wird, dass das Führungsteil einen äußeren Stützbügel mit Befestigungsmitteln zum Halten des Führungsteils aufweist, und dass der Stützbügel eine innere Verschleißschicht aus Kunststoff trägt.

Eine solche Wendevorrichtung erfordert keine Rollen oder Walzen als Führung, sondern der Gurt wird allein durch Anlage an Kunststoffflächen geführt. Es kann damit auch nicht zu einem Verschleiß von Metallteilen kommen, die auch den Fördergurt zerstören können. Dabei ist von besonderem Vorteil, dass die innere Verschleißschicht als Opfermaterial allein dem Verschleiß ausgesetzt ist, wobei dafür gesorgt werden kann, dass dieses Material eine hohe Verschleißfestigkeit besitzt. Auch benötigen die den Gurt führenden Verschleißteile bzw. die Verschleißschicht keine Stahlarmierungen.

Eine sichere Abstützung ist gegeben, wenn der Stützbügel aus einem harten Kunststoff insbesondere aus Polyurethan besteht. Hierbei ist besonders vorteilhaft, wenn die Verschleißschicht aus Kunststoff insbesondere aus Polyurethan besteht. Auch kann hierbei die Verschleißschicht eine geringere Härte und ein höheres Formänderungsvermögen (höhere Weichheit) aufweisen als der Stützbügel.

Ein leichtes Auswechseln der Verschleißschicht ist gegeben, wenn die Verschleißschicht an dem Stützbügel lösbar befestigt ist. Hierbei ist besonders vorteilhaft, wenn die Verschleißschicht von der Seite, in Förderrichtung des Gurtes in den Stützbügel einschiebbar ist.

Ein sicherer Halt der Verschleißschicht am Stützbügel ist gegeben, wenn der Stützbügel am Ende seiner Schenkel mit nach innen abgewinkelten Enden die Verschleißschicht insbesondere formschlüssig umgreift. Besonders vorteilhaft ist es, wenn der Stützbügel einseitig an der Rundung und an den Schenkeln einen Kragen als Anschlag für die Verschleißschicht aufweist. Hierbei soll der Kragen auf der in Förderrichtung des Gurtes befindlichen Auslaufseite sein.

Die Verschleißschicht kann einteilig sein. Herstellung, Montage und Wartung werden erheblich verbessert, wenn die Verschleißschicht zwei- oder mehrteilig an dem Stützbügel anliegt.

Eine sichere Führung des Gurtes wird erreicht, wenn die Verschleißschicht L- oder U-förmig nach innen abgewinkelte Enden zur Führung des Gurtes aufweist.

Eine einfache und sichere Befestigung des Stützbügels und damit des gesamten Führungsteils ist gegeben, wenn als Befestigungsmittel in dem Stützbügel außenseitig Befestigungsschienen einliegen insbesondere eingegossen sind.

Hierbei können die Befestigungsschienen einen U-förmigen Querschnitt aufweisen. Auch ist von Vorteil, wenn die Schenkelenden des U-Profils nach innen abgebogen sind, um hintergreifbar zu sein.

Besonders vorteilhaft ist es, wenn die Befestigungsschienen in dem Stützbügel so angeordnet sind, dass der Stützbügel an dem Gerüst des Fördergurtes angeschraubt werden kann.

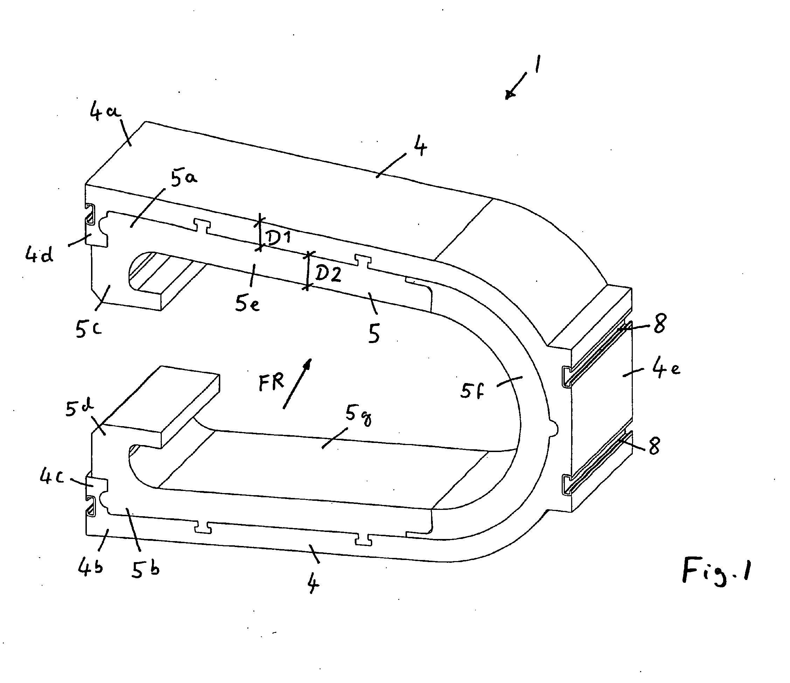

Ein Ausführungsbeispiel der Erfindung ist in den Zeichnungen dargestellt und wird im Folgenden näher beschrieben. Es zeigen
- Fig. 1: eine perspektivische Ansicht des Gurtwenders,
- Fig. 2: den Gurtwender nach Fig. 1 mit herausgenommenem, unteren Teilbereich der Verschleißschicht und
- Fig. 3: den unteren Gurttrum eines Förderbandes mit Gurtwender.

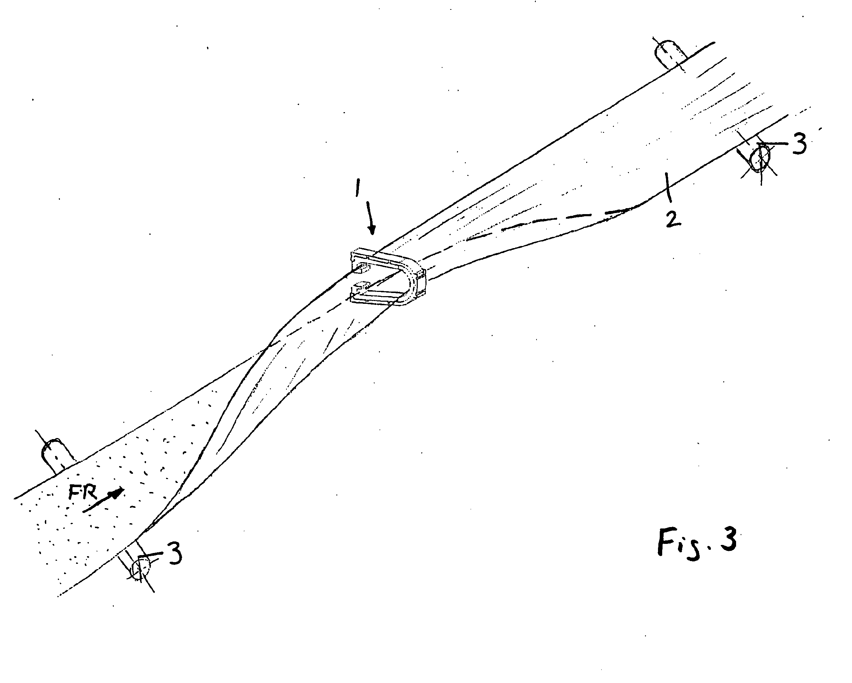

Der Gurtwender weist ein U-förmig gebogenes Führungsteil 1 auf, in dessen Innerem der untere, zurücklaufende Gurttrum 2 eines umlaufenden Förderbandes derart geführt ist, dass der Gurt 2 gewendet wird, wie dies in Fig. 3 dargestellt ist. Hierdurch gelangt die beim unteren Gurttrum unten liegende Arbeits-/Oberseite des Gurtes 2 nach oben, so dass nicht die mit dem zu fördernden Material in Berührung gekommene, verschmutzte Arbeits-/Oberseite auf den unteren Rollen 3 liegt, sondern die saubere Unterseite. Dies führt zu einem geringeren Verschleiß der Rollen und weniger Schmutzanfall unterhalb des Förderbandes.

Das Führungsteil 1 weist einen äußeren, U-förmig gebogenen Stützbügel 4 auf, dessen Innenseite von einer inneren Verschleißschicht 5 bedeckt ist. Stützbügel 4 und Verschleißschicht 5 weisen hierbei eine etwa :gleich bleibende Stärke bzw. Dicke D1, D2 auf, wobei der Gurt 2 an der Innenseite der Verschleißschicht 5 entlang gleitet, so dass normalerweise nur die Verschleißschicht 5 durch den Gurt 2 beansprucht und abgeschliffen wird. In dem Fall, in dem die innere Verschleißschicht 5 verschlissen und wider Erwarten nicht ersetzt wurde, ist weiterhin ein Notlauf gegeben, indem der Gurt 2 an der Innenseite des Stützbügels 4 entlangläuft.

Der Stützbügel 4 besteht vorzugsweise aus einem härteren Kunststoff insbesondere aus einem härteren Polyurethan als der Kunststoff insbesondere das Polyurethan der Verschleißschicht 5.

Um einen sicheren Halt der Verschleißschicht 5 an dem Stützbügel 4 zu erreichen, sind in der Innenseite des Stützbügels 4 Nuten 6 eingebracht, die sich parallel zur Förderrichtung erstrecken und vorzugsweise einen T-förmigen oder trapezförmigen Querschnitt besitzen. In den Nuten 6 liegen an der Oberseite der Verschleißschicht 5 vorspringende, vorzugsweise im Querschnitt T-förmige oder trapezförmige Leisten 7 formschlüssig ein. Eine weitere Verbesserung des Haltes der Verschleißschicht 5 am Stützbügel 4 wird dadurch erreicht, dass an beiden Schenkelenden 4a, 4b jeweils ein L-förmig nach innen abgewinkeltes Ende 4c, 4d vorspringt, das die Schenkelenden 5a, 5b der Verschleißschicht 5 umgreifen.

Zudem bilden die beiden Schenkelenden der Verschleißschicht 5 Endbereiche 5c, 5d, die L- oder U-förmig nach innen abgewinkelte Enden zur Führung der Gurtränder sind.

Die innere Verschleißschicht 5 kann einteilig ausgeführt sein. Im Ausführungsbeispiel besteht die innere Verschleißschicht 5 aus drei Verschleißteilen 5e, 5f und 5g. Hierbei bildet das Verschleißteil 5e den oberen Bereich der Verschleißschicht, das Verschleißteil 5g den unteren Bereich der Verschleißschicht und das Verschleißteil 5f das gebogene Verbindungsteil zwischen den beiden anderen Verschleißteilen.

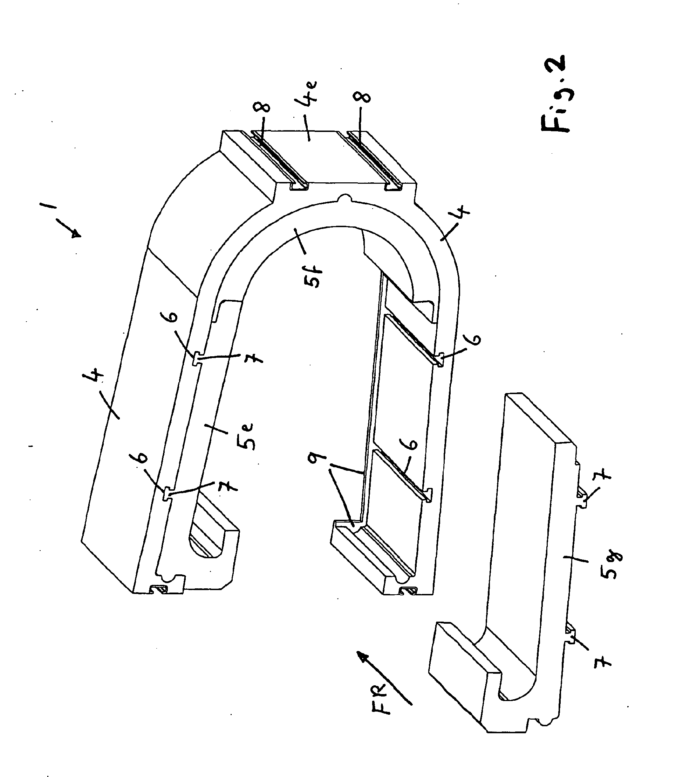

Damit kann ein Verschleißteil unabhängig von den anderen Verschleißteilen montiert und ausgewechselt, wie dies Fig. 2 zeigt. Montage und Demontage sind hierbei besonders einfach, da die Teile seitlich in den Stützbügel 4 eingeschoben werden können.

Ein vorstehender Kragen 9 an dem Stützbügel 4 auf der in Förderrichtung des Gurtes 2 zeigenden Auslaufseite dient dabei als Anschlag und als Sicherung gegen ein Herausrutschen der Verschleißteile 5. Hierbei ist die Verschleißschicht 5 wesentlich dicker als der Kragen 9 hoch ist. So hat man von der Seite, auf der der Kragen 9 sich befindet, eine optische Anzeige über den Verschleißzustand. Dies wird noch unterstützt, wenn die Verschleißschicht 5 und der Stützbügel 4 unterschiedliche Farben haben.

Eine Notlaufreserve hat man noch, wenn die Verschleißteile 5 und der Stützkragen 9 verschleißen. Da die Nuten 6 in dem Stützbügel 4 auf der Seite des Kragens 9 geschlossen sind, können die Verschleißteile 5 auch nach einem Notlauf, wenn der Kragen 9 abgearbeitet sein sollte, mit dem Gurt 2 nicht herausgeschoben werden. Sind in Förderrichtung gesehen noch die T-förmigen oder trapezförmigen Leisten 7 sichtbar, ist der Austausch bzw. der Ersatz der Verschleißteile 5 erforderlich und muss schnellstens durchgeführt werden.

Auf der den Schenkelenden 4a, 4b gegenüberliegenden Seite weist der Stützbügel 4 eine Materialverdickung 4e außen auf, die zwei hinterschnittene Befestigungsschienen 8 besitzt, die parallel zur Förderrichtung liegen. Diese vorzugsweise in den Schenkelenden 4a, 4b und in der Verdickung 4e eingegossenen metallenen Schienen 8 dienen der Befestigung des Stützbügels 4 in der Gurtwendestation 1 in dem Gerüst des Fördergurtes 2. Hierbei liegen Schraubenköpfe oder Gewindeplatten (Schienenmuttern) in den Befestigungsschienen 8 ein und können am Gerüst befestigt werden. Diese Befestigungsschienen 8 sind ohne Armierung in dem Stützbügel 4 eingebunden und fixiert. Vorzugsweise ist die Anordnung der Befestigungsschienen 8 symmetrisch. So kann die Wendevorrichtung für rechts- und auch für linkslaufende Gurte 2 eingesetzt werden. Die Wendevorrichtung 1 muss für einen entgegenlaufenden Gurt 2 um ihre Symmetrieachse um 180° gedreht eingebaut werden.

## Patentansprüche

1. Vorrichtung zum Wenden des umlaufenden Gurtes (2) eines Förderbandes, **dadurch gekennzeichnet, dass** mindestens ein U-förmig gebogenes Führungsteil (1) vorgesehen ist, innerhalb dem der Gurt (2) geführt und gewendet wird, dass das Führungsteil (1) einen äußeren Stützbügel (4) mit Befestigungsmitteln (8) zum Halten des Führungsteils aufweist, und dass der Stützbügel (4) eine innere Verschleißschicht (5) aus Kunststoff trägt.

2. Vorrichtung nach Anspruch 1, **dadurch gekennzeichnet, dass** der Stützbügel (4) aus einem harten Kunststoff insbesondere aus Polyurethan besteht.

3. Vorrichtung nach Anspruch 2, **dadurch gekennzeichnet, dass** die Verschleißschicht (5) aus Kunststoff insbesondere aus Polyurethan besteht.

4. Vorrichtung nach Anspruch 3, **dadurch gekennzeichnet, dass** die Verschleißschicht (5) eine geringere Härte und ein höheres Formänderungsvermögen (höhere Weichheit) aufweist als der Stützbügel (4).

5. Vorrichtung nach einem der vorherigen Ansprüche, **dadurch gekennzeichnet, dass** der Stützbügel (4) und/oder die Verschleißschicht (5) an der Stützschicht keine Stahlarmierung aufweisen.

6. Vorrichtung nach einem der vorherigen Ansprüche, **dadurch gekennzeichnet, dass** die Verschleißschicht (5) an dem Stützbügel (4) lösbar befestigt ist.

7. Vorrichtung nach einem der vorherigen Ansprüche, **dadurch gekennzeichnet, dass** die Verschleißschicht (5) von der Seite, in Förderrichtung des Gurtes (2) in den Stützbügel (4) einschiebbar ist.

8. Vorrichtung nach einem der vorherigen Ansprüche, **dadurch gekennzeichnet, dass** der Stützbügel (4) am Ende seiner Schenkel (4a, 4b) mit nach innen abgewinkelten Enden (4c, 4d) die Verschleißschicht (5) insbesondere formschlüssig umgreift.

9. Vorrichtung nach einem der vorherigen Ansprüche, **dadurch gekennzeichnet, dass** der Stützbügel (4) einseitig an der Rundung und an den Schenkeln einen Kragen (9) als Anschlag für die Verschleißschicht (5) aufweist.

10. Vorrichtung nach Anspruch 9, **dadurch gekennzeichnet, dass** der Kragen (9) auf der in Förderrichtung (FR) des Gurtes (2) befindlichen Auslaufseite ist.

11. Vorrichtung nach einem der vorherigen Ansprüche, **dadurch gekennzeichnet, dass** die Verschleißschicht (5) ein- oder mehrteilig (5e, 5f, 5g) an dem Stützbügel (4) anliegt.

12. Vorrichtung nach einem der vorherigen Ansprüche, **dadurch gekennzeichnet, dass** die Verschleißschicht (5) L- oder U-förmig nach innen abgewinkelte Enden (5c, 5d) zur Führung des Gurtes (2) aufweist.

13. Vorrichtung nach einem der vorherigen Ansprüche, **dadurch gekennzeichnet, dass** als Befestigungsmittel in dem Stützbügel (4) außenseitig Befestigungsschienen (8) einliegen insbesondere eingegossen sind.

14. Vorrichtung nach Anspruch 13, **dadurch gekennzeichnet, dass** die Befestigungsschienen (8) einen U-förmigen Querschnitt aufweisen.

15. Vorrichtung nach Anspruch 14, **dadurch gekennzeichnet, dass** die Schenkelenden der U-förmigen Befestigungsschienen (8) nach innen abgebogen sind, um hintergreifbar zu sein.

16. Vorrichtung nach einem der Ansprüche 13 bis 15, **dadurch gekennzeichnet, dass** die Befestigungsschienen (8) in dem Stützbügel (4) so angeordnet sind, dass der Stützbügel an dem Gerüst des Fördergurtes (2) angeschraubt werden kann.

## Claims

1. Device for turning the circulating belt (2) of a conveyor belt, **characterised in that** at least one U-shaped curved guide part (1) is provided within which the belt (2) is guided and turned, that the guide part (1) possesses an outer supporting bracket (4) with fixing means (8) for mounting the guide part, and that the supporting bracket (4) carries an inner wearing layer (5) made of plastic.

2. Device according to claim 1, **characterised in that** the supporting bracket (4) consists of a hard plastic, in particular polyurethane.

3. Device according to claim 2, **characterised in that** the wearing layer (5) consists of plastic, in particular polyurethane.

4. Device according to claim 3, **characterised in that** the wearing layer (5) displays less hardness and a greater deformation capacity (greater softness) than the supporting bracket (4).

5. Device according to one of the preceding claims, **characterised in that** the supporting bracket (4) and/or the wearing layer (5) on the supporting layer do not possess any steel reinforcement.

6. Device according to one of the preceding claims, **characterised in that** the wearing layer (5) is attached detachably to the supporting bracket (4).

7. Device according to one of the preceding claims, **characterised in that** the wearing layer (5) can be pushed into the supporting bracket (4) from the side in the direction of transportation of the belt (2).

8. Device according to one of the preceding claims, **characterised in that** the supporting bracket (4) engages around the wearing layer (5), in particular in a form-fitting manner, with inwardly-angled ends (4c, 4d) at the end of its arms (4a, 4b).

9. Device according to one of the preceding claims, **characterised in that** the supporting bracket (4) possesses a flange (9) on one side on the rounded section and on the arms as a mechanical stop for the wearing layer (5).

10. Device according to claim 9, **characterised in that** the flange (9) is arranged on the downstream side in the direction of transportation of the belt (2).

11. Device according to one of the preceding claims, **characterised in that** the wearing layer (5) lies on the supporting bracket (4) in one or several sections (5e, 5f, 5g).

12. Device according to one of the preceding claims, **characterised in that** the wearing layer (5) possesses L- or U-shaped inwardly-angled ends (5c, 5d) for guiding the belt (2).

13. Device according to one of the preceding claims, **characterised in that**, as fixing means, fixing rails (8) are embedded in, in particular cast into, the outer side of the supporting bracket (4).

14. Device according to claim 13, **characterised in that** the fixing rails (8) are U-shaped in cross section.

15. Device according to claim 14, **characterised in that** the ends of the U-shaped fixing rails (8) are bent inwards so as to be engageable.

16. Device according to one of the claims 13 bis 15, **characterised in that** the fixing rails (8) are arranged in the supporting brackets (4) in such a way that the supporting bracket can be screwed onto the frame of the conveyor belt (2).

## Revendications

1. Dispositif à retourner la courroie en circulation (2) d'une bande transporteuse, **caractérisé en ce qu'**il est prévu au moins une pièce de guidage (1) pliée en forme de U à l'intérieur de laquelle est guidée et retournée la courroie (2), que la pièce de guidage (1) présente un étrier-support (4) extérieur comprenant des moyens de fixation (8) pour le maintien de la pièce de guidage, et que l'étrier-support (4) supporte une couche d'usure (5) intérieure en matière synthétique.

2. Dispositif selon la revendication 1, **caractérisé en ce que** l'étrier-support (4) est en matière synthétique rigide, en particulier en polyuréthanne.

3. Dispositif selon la revendication 2, **caractérisé en ce que** la couche d'usure (5) est en matière synthétique, en particulier en polyuréthanne.

4. Dispositif selon la revendication 3, **caractérisé en ce que** la couche d'usure (5) présente une dureté inférieure et une déformabilité supérieure (souplesse supérieure) à celles de l'étrier-support (4).

5. Dispositif selon l'une des revendications précédentes, **caractérisé en ce que** l'étrier-support (4) et/ou la couche d'usure (5) ne présentent aucune armature d'acier sur la couche d'appui.

6. Dispositif selon l'une des revendications précédentes, **caractérisé en ce que** la couche d'usure (5) est fixée de manière amovible sur l'étrier-support (4).

7. Dispositif selon l'une des revendications précédentes, **caractérisé en ce que** la couche d'usure (5) est insérable de côté dans l'étrier-support (4), dans la direction de transport de la courroie (2).

8. Dispositif selon l'une des revendications précédentes, **caractérisé en ce que** l'étrier-support (4) enveloppe la couche d'usure (5) à l'extrémité de ses branches (4a, 4b), en particulier par coopération de forme, par des extrémités (4c, 4d) coudées vers l'intérieur.

9. Dispositif selon l'une des revendications précédentes, **caractérisé en ce que** l'étrier-support (4) présente unilatéralement, à l'arrondi et aux branches, un collet (9) en tant que butée pour la couche d'usure (5).

10. Dispositif selon la revendication 9, **caractérisé en ce que** le collet (9) est sur le côté sortie situé dans la direction de transport (FR) de la courroie (2).

11. Dispositif selon l'une des revendications précédentes, **caractérisé en ce que** la couche d'usure (5) s'applique en une ou plusieurs parties (5e, 5f, 5g) sur l'étrier-support (4).

12. Dispositif selon l'une des revendications précédentes, **caractérisé en ce que** la couche d'usure (5) présente des extrémités (5c, 5d) coudées vers l'intérieur en forme de L ou de U pour le guidage de la courroie (2).

13. Dispositif selon l'une des revendications précédentes, **caractérisé en ce que**, en tant que moyens de fixation, des rails de fixation (8) reposent dans l'étrier-support (4) du côté extérieur, en particulier coulés.

14. Dispositif selon la revendication 13, **caractérisé en ce que** les rails de fixation (8) présentent une section transversale en forme de U.

15. Dispositif selon la revendication 14, **caractérisé en ce que** les extrémités de branches des rails de fixation (8) en forme de U sont pliées vers l'intérieur pour pouvoir être enserrées.

16. Dispositif selon l'une des revendications 13 à 15, **caractérisé en ce que** les rails de fixation (8) sont disposés dans l'étrier-support (4) de telle sorte que l'étrier-support puisse être vissé sur le châssis de la courroie de transport (2).
